# EUROPEAN PATENT APPLICATION

(11) **EP 0 953 606 A1**
(43) Date of publication of application: **03.11.1999**
(21) Application number: 97946795.8
(22) Date of filing: 26.11.1997
(51) Int. Cl.: C08L 81/02

(54) **POLYARYLENE SULFIDE RESIN COMPOSITION**

(30) Priority: 27.11.1996 JP 33151496; 01.08.1997 JP 22096897
(71) Applicant: KUREHA KAGAKU KOGYO KABUSHIKI KAISHA, Tokyo 103-0012 (JP)
(72) Inventor: NISHIHATA, Naomitsu, Nishiki Research Laboratories, Iwaki-shi, Fukushima 974 (JP); TADA, Masahito, Nishiki Research Laboratories, Iwaki-shi, Fukushima 974 (JP); OHUCHI, Kiyomi, Nishiki Research Laboratories, Iwakki-shi, Fukushima 974 (JP)
(74) Representative: Jones, Helen Marjorie Meredith
(86) International application number: JP9704312
(87) International publication number: WO9823685

(57) **Abstract**

A poly(arylene sulfide) resin composition comprising 55 to 85 wt.% of a poly(arylene sulfide) having a melt viscosity of at least 80 Pa·s as measured at 310°C and a shear rate of 1,200/sec, 3 to 6 wt.% of conductive carbon black having an oil absorption of at least 360 ml/100 g as determined by using DBP, 2 to 10 wt.% of graphite having an average particle diameter of at most 30 µm, and 10 to 29 wt.% of an epoxy group-containing α-olefin copolymer.

## Description

### 〈TECHNICAL FIELD〉

The present invention relates to a poly(arylene sulfide) resin composition having an electrical resistance in a moderately conductive region, and more particularly to a poly(arylene sulfide) resin composition which has excellent toughness and good molding or forming ability and can develop a volume resistivity in a moderately conductive region with good reproducibility.

The poly(arylene sulfide) resin composition according to the present invention has a volume resistivity in a moderately conductive region and is excellent in heat resistance, weather resistance, flame retardancy, chemical resistance, mechanical strength, toughness, flexibility at low temperatures, etc., and can hence be applied to fields of which electrical conductivity, antistatic property, electromagnetic wave shielding ability, low electrical resistance, etc. are required, for example, wide fields such as electrical and electronic parts, electric appliances and acoustic equipment.

In particular, the poly(arylene sulfide) resin composition according to the present invention is suitable for use as parts for cables. Parts for cables composed of the poly(arylene sulfide) resin composition according to the present invention have excellent electrical and magnetic properties such as relaxation of electric field concentration, relaxation of electrical stress, anti-corona discharging property, antistatic property and electromagnetic wave shielding ability and are also excellent in heat resistance, weather resistance, flame retardancy, waterproofness, airtightness, toughness, etc.

### 〈BACKGROUND ART〉

Moderately conductive resin compositions generally comprise a synthetic resin such as a thermoplastic resin or thermosetting resin and conductive particles such as conductive carbon black compounded in the resin, have an electrical conductivity (referred to as "moderate conductivity") between a metal and a synthetic resin, and are used in fields of which electrical conductivity, antistatic property, low electrical resistance, electromagnetic wave shielding ability and the like are required.

More specifically, the moderately conductive resin composition are suitable for use, for example, as resin materials for forming at least surface layers of charging rolls, transfer rolls, developing rolls, charging belts, static charge eliminating belts and the like in image forming apparatus of an electrophotographic system. The moderately conductive resin compositions are also useful as, for example, as films and containers for packaging electronic parts, carriers for silicon wafers, shielded packs, conveyor tubes for powder coatings, containers for liquid crystals, sheathing materials for various kinds of apparatus or equipment, parts for cables, etc. making good use of their electrical conductivity, antistatic property, destaticizing property, anti-dust-collecting property, electromagnetic wave shielding ability, low electrical resistance and the like.

However, the moderately conductive resin compositions are required to not only have a volume resistivity in a moderately conductive region, but also have various properties suitable for respective application fields. Regarding to this, a more specific description will be given taking parts for cables as an example.

In various cables such as power cables (electrical cables) and power lines (electrical wires), are used many parts, for example, clamps for electrical wires, spacers for electrical wires, connectors, connecting parts, joint reinforcing members, joint protectors, stress cones, spiral rods, field-relaxing tubes, sleeves, sleeve covers, etc. These parts for cables are often required to have electrical and magnetic properties such as relaxation of electric field concentration, relaxation of electrical stress, anti-corona discharging property, antistatic property and electromagnetic wave shielding ability in addition to necessary forms and functions for the respective parts. Since the parts for cables are often used in the outdoors, they are also required to be excellent in various properties such as heat resistance, weather resistance, flame retardancy, waterproofness and airtightness.

As materials of parts for various cables, polymeric materials such as synthetic rubbers, epoxy resins, crosslinked polyethylene resins and fluorocarbon resins have heretofore been used either singly or in combined forms with various materials, in addition to insulators (hard porcelain) and metals. For example, Japanese Patent Application Laid-Open No. 22716/1996 has proposed that an insulating rubber composition having a high dielectric constant obtained by compounding furnace carbon black into ethylene-propylene rubber or ethylene-propylene-diene rubber is used as a stress cone for forming an intermediate joint or terminal joint for a power cable. In Japanese Patent Application Laid-Open No. 149675/1996, it is described that a bushing for protecting an electrically connected part of a high-voltage cable end with an apparatus or the like is formed by molding an epoxy resin. Japanese Patent Application Laid-Open No. 223763/1996 discloses a joint reinforcing member for power cables, comprising an outer moderately conductive layer and an inner moderately conductive layer each composed of a crosslinked or uncrosslinked conductive rubber, and an insulating layer composed of a crosslinked or uncrosslinked insulating rubber or plastic.

Japanese Patent Application Laid-Open No. 275366/1996 has proposed that a connected point between a high-voltage cable end and an insulated wire is covered with a protector formed of a fluorocarbon resin. Japanese Patent Application Laid-Open No. 280128/1996 discloses that a sleeve fitted on a joint of an aerial wire is covered with a linear sleeve cover made of a black-colored polyethylene resin. Japanese Patent Application Laid-Open Nos. 9472/1997 and 103023/1997 each disclose a spacer for an electrical wire, which has a structure that a core made of a reinforced plastic is covered with a synthetic rubber. Japanese Patent Application Laid-Open No. 23562/1997 has proposed that a field-relaxing tube used in a tubular termination sealing end of a power cable is formed by a tube made of high-dielectric silicone rubber, on the inner surface of which a moderately conductive layer has been formed. Japanese Patent Application Laid-Open No. 111089/1997 has proposed that an outer moderately conductive layer of a crosslinked polyethylene-insulated cable is formed by a moderately conductive composition obtained by compounding oil furnace carbon black and an antioxidant compounded into a styrene-modified ethylene-vinyl acetate copolymer. Japanese Patent Application Laid-Open No. 168223/1997 has proposed a joint end of a spiral rod. This publication discloses that the spiral rod for preventing wind noise and ice coating by winding around an aerial wire is formed by a metal, a synthetic resin such as nylon, a composite material composed of a metallic material coated with a synthetic resin, or the like.

However, the conventional polymeric materials used in the field of parts for cables do not fully satisfy various properties such as heat resistance, weather resistance and flame retardancy. On the other hand, from the viewpoint of antistatic property, electromagnetic wave shielding ability, anti-corona discharging property and the like, parts for cables are often required to have electrical conductivity (referred to as "moderate conductivity") between a metal and a polymeric material. However, it is difficult to stably attain the desired moderate conductivity by the conventional polymeric materials.

Even in many uses other than the parts for cables, the moderately conductive resin compositions are required to be excellent in heat resistance, flame retardancy, chemical resistance, mechanical properties and the like. The moderately conductive resin compositions are also required to have a uniform volume resistivity and be free of a scatter thereof in their many application fields. If the volume resistivity distribution of, for example, a charging roll installed in an image forming apparatus of the electrophotographic system varies, such a charging roll fails to equally and uniformly charge a photosensitive member, and in its turn fails to provide an image of high quality. In a transfer roll as well, if its volume resistivity varies, it is difficult to precisely transfer a toner to transfer paper, resulting in a failure to provide an image of high quality.

On the other hand, poly(arylene sulfides) (hereinafter abbreviated as "PAS") represented by poly(phenylene sulfide) (hereinafter abbreviated as "PPS") are engineering plastics excellent in heat resistance, flame retardancy, chemical resistance, dimensional stability, mechanical properties and the like, and their uses are spread as electrical and electronic parts, precision instrument parts, automotive parts, etc. If moderate conductivity can be imparted to PAS having such excellent various properties, new uses of the PAS may be developed to such many fields as described above, including parts for cables. However, resin compositions obtained by compounding conductive particles into a PAS have involved a problem that their volume resistivities within a moderately conductive region greatly vary, and mechanical properties thereof are also deteriorated.

More specifically, when the conductive particles are compounded into a PAS, a resin composition having a low volume resistivity can be obtained. However, in the conventional moderately conductive PAS resin composition, the volume resistivity greatly varies with lot or location, and so it has been difficult to provide a resin composition having the desired volume resistivity with good reproducibility. When the compounding proportion of the conductive particles into the PAS is increased to reduce the volume resistivity to a great extent, a scatter of volume resistivity can be narrowed, but mechanical properties of the resulting resin composition are markedly deteriorated.

In order to solve these problems, there have heretofore been proposed, for example, (1) resin compositions obtained by compounding conductive carbon black, natural flake graphite and an inorganic filler into PPS (Japanese Patent Publication No. 86982/1993), (2) conductive compounds obtained by compounding conductive carbon black, graphite and a filler into a PAS (Japanese Patent Application Laid-Open No. 272665/1989), (3) conductive compositions obtained by dispersing PPS and carbon black in a high-molecular binder resin (Japanese Patent Application Laid-Open No. 278565/1989), (4) conductive resin compositions obtained by compounding conductive carbon black, graphite and polytetrafluoroethylene capable of fibrillating into a thermoplastic resin such as PPS (Japanese Patent Application Laid-Open No. 91556/1991), (5) conductive thermoplastic resin products obtained by compounding conductive carbon black and artificial graphite into a thermoplastic resin such as PPS to prepare a conductive resin masterbatch and blending this masterbatch with a thermoplastic resin (Japanese Patent Application Laid-Open No. 286103/1995), etc.

However, the resin compositions obtained by compounding conductive carbon black into the PAS become wide in a scatter of volume resistivity, and their volume resistivities significantly fluctuate even by a slight change in the compounding proportion of the conductive carbon black. A moderately conductive PAS resin composition having a volume resistivity moderately lowered can be provided by compounding conductive carbon black and graphite into a PAS. However, the conventional moderately conductive PAS resin compositions have involved a drawback that they are generally low in toughness represented by tensile elongation at break (tensile elongation at rupture), and thus cannot be used in fields of which high toughness is required. The conventional moderately conductive PAS resin compositions are also poor in flexibility at low temperatures and tend to cause cracks, flex crack, etc., and so there has been a limit to their use in cold districts or at low temperatures. Further, the conventional moderately conductive PAS resin compositions have been yet difficult to attain the desired volume resistivity with good reproducibility.

As described above, the PAS is excellent in various properties such as heat resistance, chemical resistance, flame retardancy, weather resistance and mechanical properties, but it has been extremely difficult to provide a moderately conductive PAS resin composition which has good toughness and can develop the desired lowered volume resistivity with good reproducibility.

### 〈DISCLOSURE OF THE INVENTION〉

It is an object of the present invention to provide a PAS resin composition which has a volume resistivity within a moderately conductive region, and is good in melt processing suitability for injection molding, extrusion and the like and excellent in toughness represented by tensile elongation at break.

Another object of the present invention is to provide a PAS resin composition the volume resistivity of which can be controlled to a desired value within a range of 10³-10¹³ Ωcm with good reproducibility while retaining the excellent properties inherent in the PAS, such as heat resistance and flame retardancy.

A further object of the present invention is to provide various kinds of molded or formed products using a PAS resin composition which has excellent toughness and good molding or forming ability and can develop a volume resistivity in a moderately conductive region with good reproducibility.

A particular object of the present invention is to provide parts for cables, which are excellent in heat resistance, chemical resistance, flame retardancy, weather resistance, waterproofness, airtightness, toughness, flexibility at low temperatures, etc. in addition to excellent electrical and magnetic properties such as relaxation of electric field concentration, relaxation of electrical stress, anti-corona discharging property, antistatic property and electromagnetic wave shielding ability.

The present inventors have carried out an extensive investigation with a view toward overcoming the above-described problems involved in the prior art. As a result, it has been found that a PAS resin composition the volume resistivity of which can be controlled to a desired value within a range of 10³-10¹³ Ωcm with good reproducibility, and which has excellent toughness as demonstrated by a tensile elongation at break of at least 10% and can be subjected to injection molding and extrusion, can be obtained by compounding conductive carbon black having an oil absorption of at least 360 ml/100 g as determined by using DBP, graphite having an average particle diameter of at most 30 µm and an epoxy group-containing α-olefin copolymer in respective specific proportions into a PAS having a specific melt viscosity.

When the PAS resin composition according to the present invention is used to form parts for cables, for example, clamps for electrical wires, spacers for electrical wires, connectors, connecting parts, joint reinforcing members, joint protectors, stress cones, spiral rods, field-relaxing tubes, sleeves, sleeve covers, de-icing fixtures, etc., they can be provided as parts for cables, which exhibit excellent electrical and magnetic properties and have excellent heat resistance, weather resistance, flame retardancy, waterproofness, airtightness, toughness, etc.

The PAS resin composition according to the present invention has a moderately lowered volume resistivity within a moderately conductive region and moreover is excellent in heat resistance, weather resistance, flame retardancy, chemical resistance, mechanical strength, toughness, flexibility at low temperatures, etc., and can hence be applied to not only parts for cables, but also many fields of which electrical conductivity, antistatic property, electromagnetic wave shielding ability, low electrical resistance, etc. are required. The present invention has been led to completion on the basis of these findings.

According to the present invention, there is thus provided a poly(arylene sulfide) resin composition comprising (A) 55 to 85 wt.% of a poly(arylene sulfide) having a melt viscosity of at least 80 Pa·s as measured at 310°C and a shear rate of 1,200/sec, (B) 3 to 6 wt.% of conductive carbon black having an oil absorption of at least 360 ml/100 g as determined by using DBP, (C) 2 to 10 wt.% of graphite having an average particle diameter of at most 30 µm, and (D) 10 to 29 wt.% of an epoxy group-containing α-olefin copolymer.

According to the present invention, there are also provided molded or formed products formed of the resin composition.

### 〈BRIEF DESCRIPTION OF THE DRAWING〉

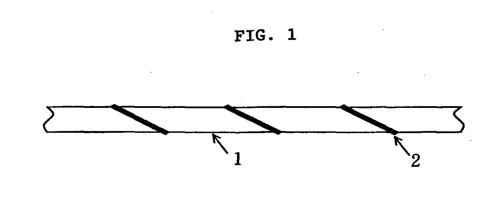

FIG. 1 schematically illustrates an aerial wire around which a spiral rod has been wound.

### 〈BEST MODE FOR CARRYING OUT THE INVENTION〉

### Poly(arylene sulfide) (PAS):

The PAS useful in the practice of the present invention is an aromatic polymer having predominant repeating units of arylene sulfide represented by the formula [-Ar-S-] in which -Ar- means an arylene group. When a repeating unit [-Ar-S-] is defined as 1 mole (basal mole), the PAS used in the present invention is a polymer containing this repeating unit in a proportion of generally at least 50 mol%, preferably at least 70 mol%, more preferably at least 90 mol%.

As examples of the arylene group, may be mentioned a p-phenylene group, a m-phenylene group, substituted phenylene groups (the substituent being preferably an alkyl group having 1 to 6 carbon atoms or a phenyl group), a p,p'-diphenylene sulfone group, a p,p'-biphenylene group, a p,p'-diphenylenecarbonyl group and a naphthylene group. As the PAS, a polymer predominantly having only the same arylene groups may preferably be used. However, a copolymer containing two or more different arylene groups may be used from the viewpoints of processability and heat resistance.

Among these PASs, PPS having predominant repeating units of p-phenylene sulfide is particularly preferred because it is excellent in processability and industrially available with ease. Besides the PPS, poly(arylene ketone sulfides), poly(arylene ketone ketone sulfide) and the like may be used. As specific examples of copolymers, may be mentioned random or block copolymers having repeating units of p-phenylene sulfide and repeating units of m-phenylene sulfide, random or block copolymers having repeating units of phenylene sulfide and repeating units of arylene ketone sulfide, random or block copolymers having repeating units of phenylene sulfide and repeating units of arylene ketone ketone sulfide, and random or block copolymers having repeating units of phenylene sulfide and repeating units of arylene sulfone sulfide. These PASs are preferably crystalline polymers. Besides, the PASs are preferably linear polymers from the viewpoints of toughness and strength.

Such a PAS can be obtained in accordance with any known process (for example, Japanese Patent Publication No. 33775/1988) in which an alkali metal sulfide and a dihalogen-substituted aromatic compound are subjected to a polymerization reaction in a polar solvent.

As examples of the alkali metal sulfide, may be mentioned lithium sulfide, sodium sulfide, potassium sulfide, rubidium sulfide and cesium sulfide. Sodium sulfide formed by the reaction of NaSH and NaOH in the reaction system may also be used.

As examples of the dihalogen-substituted aromatic compound, may be mentioned p-dichlorobenzene, m-dichlorobenzene, 2,5-dichlorotoluene, p-dibromobenzene, 2,6-dichloronaphthalene, 1-methoxy-2,5-dichlorobenzene, 4,4'-dichlorobiphenyl, 3,5-dichlorobenzoic acid, p,p'-dichlorodiphenyl ether, 4,4'-dichlorodiphenyl sulfone, 4,4'-dichlorodiphenyl sulfoxide and 4,4'-dichlorodiphenyl ketone. These compounds may be used either singly or in any combination thereof.

In order to introduce some branched or crosslinked structure into the PAS, a small amount of a polyhalogen-substituted aromatic compound having at least 3 halogen substituents per molecule may be used in combination. As preferable examples of the polyhalogen-substituted aromatic compounds, may be mentioned trihalogen-substituted aromatic compounds such as 1,2,3-trichlorobenzene, 1,2,3-tribromobenzene, 1,2,4-trichlorobenzene, 1,2,4-tribromobenzene, 1,3,5-trichlorobenzene, 1,3,5-tribromobenzene and 1,3-dichloro-5-bromobenzene, and alkyl-substituted derivatives thereof. These compounds may be used either singly or in any combination thereof. Among these, 1,2,4-trichlorobenzene, 1,3,5-trichlorobenzene and 1,2,3-trichlorobenzene are preferred from the viewpoints of economy, reactivity, physical properties and the like.

As the polar solvent, aprotic organic amide solvents represented by N-alkylpyrrolidones such as N-methyl-2-pyrrolidone (hereinafter abbreviated as "NMP"), 1,3-dialkyl-2-imidazolidinone, tetraalkylureas and hexaalkylphosphoric triamides are preferred because they have high stability in the reaction system and are easy to provide a high-molecular weight polymer.

The melt viscosity of the PAS used in the present invention is at least 80 Pa·s, preferably at least 100 Pa·s, more preferably at least 120 Pa·s as measured at 310°C and a shear rate of 1,200/sec. If the melt viscosity of the PAS is too low, it is difficult to enhance the tensile elongation at break of the resulting resin composition, and there is a possibility that other mechanical properties may become insufficient. The melt viscosity of the PAS is generally within a range of 80 to 600 Pa·s, preferably 100 to 400 Pa·s, more preferably 120 to 300 Pa·s.

A compounding proportion of the PAS is 55 to 85 wt.%, preferably 60 to 80 wt.% based on the total weight of the composition. If the compounding proportion of the PAS is too low, the mechanical properties of the resulting resin composition are deteriorated, and it is also difficult to develop the various properties inherent in the PAS, such as heat resistance, chemical resistance, flame retardancy, weather resistance and dimensional stability. If the compounding proportion of the PAS resin is too high, it is difficult to lower the volume resistivity of the resulting resin composition to the desired degree.

### Conductive carbon black:

In the present invention, conductive carbon black and graphite are compounded in combination as conductive particles in order to control the volume resistivity of the PAS resin within the desired range. As the conductive carbon black, is used that having an oil absorption of at least 360 ml/100 g as determined by using DBP. The DBP oil absorption of the conductive carbon black is determined by the method prescribed in ASTM D 2414.

More specifically, a carbon black sample is placed in a chamber of a measuring apparatus (Absorpotometer), and DBP (i.e., n-dibutyl phthalate) is added at a constant rate to the chamber. The viscosity of the carbon black increases as it absorbs DBP. The DBP oil absorption is calculated out from the amount of DBP absorbed until the viscosity reaches a certain value. The detection of the viscosity is conducted by a torque sensor.

If the DBP oil absorption of the conductive carbon black is too little, a PAS resin composition is required to compound a greater amount of the conductive carbon black in order to lower its volume resistivity to the desired degree. As a result, the molding or forming ability and mechanical properties of the resin composition are impaired. It is hence not preferred to use such carbon black. No particular limitation is imposed on the upper limit of the DBP oil absorption of the conductive carbon black. However, it is generally 750 ml/100 g or less from the viewpoint of production. The DBP oil absorption is preferably within a range of 400 to 600 ml/100 g.

The compounding proportion of the conductive carbon black is 3 to 6 wt.%, preferably 4 to 5 wt.% based on the total weight of the composition. The volume resistivity of the resulting resin composition is well balanced with its physical properties such as strength and elongation by controlling the compounding proportion of the conductive carbon black within the limited range. If the conductive carbon black is compounded in a high proportion, the electrical resistance of the resulting resin composition is rapidly lowered. Therefore, it is difficult to control the volume resistivity of the resin composition to the desired value with good reproducibility by the conductive carbon black alone. When the volume resistivity of a resin composition is lowered to a region of not higher than 10⁵ Ωcm by the conductive carbon black alone, it is particularly difficult to develop sufficient elongation in the resin composition.

The compounding proportion of the conductive carbon black is preferably controlled to 0.70-0.95 times as much as the added amount of the conductive carbon black at a critical point that a rapid lowering of the electrical resistance of a resin component containing the PAS and the epoxy group-containing α-olefin copolymer is observed when the conductive carbon black is added to the resin component, namely, the added amount of the conductive carbon black at a point that the rate of change in the volume resistivity amounts to at least 10³ Ωcm per percent by weight of the added amount of the conductive carbon black. From this point of view as well, it is reasonable to control the compounding proportion of the conductive carbon black within the limited range of 3 to 6 wt.%, preferably 4 to 5 wt.%.

### Graphite:

Graphite having an average particle diameter of at most 30 µm, preferably at most 15 µm is used in the present invention. If the average particle diameter of the graphite is too great, tensile elongation at break of the resulting resin composition is deteriorated though its volume resistivity is easy to be lowered.

As the graphite, there may be used artificial graphite obtained by subjecting coke, tar, pitch or the like to a graphitizing treatment at a high temperature, or natural graphite such as flake graphite, vein graphite or earthy graphite. The compounding proportion of the graphite is 2 to 10 wt.%, preferably 2 to 6 wt.% based on the total weight of the composition. The graphite is used in a compounding proportion within this limited range in combination with the conductive carbon black, whereby the volume resistivity of the resulting resin composition can be lowered easily and stably to the desired degree.

### Epoxy group-containing α-olefin copolymer:

The epoxy group-containing α-olefin copolymer useful in the practice of the present invention is a copolymer having at least recurring units derived from an α-olefin (i.e., α-olefin units) and recurring units derived from a glycidyl group-containing unsaturated monomer (i.e., glycidyl group-containing unsaturated monomer units). Typical examples of the epoxy group-containing α-olefin copolymer include (1) copolymers of an α-olefin and a glycidyl group-containing unsaturated monomer, and (2) grafting precursors obtained by copolymerizing at least one vinyl monomer and a radical-(co)polymerizable organic peroxide in the presence of a copolymer of an α-olefin and a glycidyl group-containing unsaturated monomer. The grafting precursor may be grafted upon its melt kneading with other components, or may be melt-kneaded in advance to graft it before its blending with other components.

The copolymers of an α-olefin and a glycidyl group-containing unsaturated monomer include poly-component copolymers containing at least three monomers of an α-olefin, a glycidyl group-containing unsaturated monomer and a further unsaturated monomer in addition to the bipolymers of both monomers. The proportion of the α-olefin units in the copolymer is generally 50 to 99.5 wt.%, preferably 60 to 99 wt.%, more preferably 70 to 98 wt.%. The proportion of the glycidyl group-containing unsaturated monomer units is generally 0.5 to 50 wt.%, preferably 1 to 40 wt.%, more preferably 2 to 30 wt.%. The proportion of the further unsaturated monomer units is generally 0 to 40 wt.%, preferably 0 to 30 wt.%, more preferably 0 to 20 wt.%. The polymeric form of the epoxy group-containing α-olefin copolymer may be any of random, block and graft copolymers.

Examples of the α-olefin monomer include ethylene, propylene, 1-butene, 1-hexene, 1-octene and 4-methyl-1-pentene. Of these, ethylene is particularly preferably used.

Examples of the glycidyl group-containing unsaturated monomer include glycidyl esters such as glycidyl acrylate, glycidyl methacrylate, monoglycidyl itaconate, monoglycidyl butenetricarboxylate, diglycidyl butenetricarboxylate, triglycidyl butenetricarboxylate, monoglycidyl maleate, monoglycidyl crotonate and monoglycidyl fumarate; glycidyl ethers such as vinyl glycidyl ether, allyl glycidyl ether, glycidyloxyethyl vinyl ether and styrene-p-glycidyl ether; and p-glycidylstyrene. Of these, the glycidyl esters of α,β-unsaturated acids are preferred.

Examples of the further unsaturated monomer include vinyl ester monomers such as vinyl acetate and vinyl propionate; vinyl ether monomers; (meth)acrylonitrile; aromatic vinyl monomers such as styrene and α-methylstyrene; and carbon monoxide.

Specific examples of the copolymers of the α-olefin and the glycidyl group-containing unsaturated monomer include ethylene/glycidyl methacrylate copolymers, ethylene/vinyl acetate/glycidyl methacrylate copolymers, ethylene/ethyl acrylate/glycidyl methacrylate copolymers, ethylene/glycidyl acrylate copolymers and ethylene/vinyl acetate/glycidyl acrylate copolymers. Of these, ethylene/glycidyl methacrylate copolymers, ethylene/ethyl acrylate/glycidyl methacrylate copolymers and ethylene/vinyl acetate/glycidyl methacrylate copolymers are preferred. These copolymers may be used either singly or in any combination thereof.

The copolymer of the α-olefin and the glycidyl group-containing unsaturated monomer can be obtained by subjecting a monomer mixture containing 50 to 99.5 wt.% of the α-olefin, 0.5 to 50 wt.% of the glycidyl group-containing unsaturated monomer and 0 to 40 wt.% of the further unsaturated monomer to high-pressure polymerization in the presence of a radical polymerization initiator in an amount of 0.0001 to 1 wt.% based on the total weight of the monomers. The pressure upon the polymerization is generally 5 to 40 kPa, preferably 10 to 35 kPa. The reaction temperature is generally 50 to 400°C, preferably 100 to 350°C. The polymerisation reaction is conducted by a method of catalytically polymerizing the monomer mixture at once or by stages in the presence of a chain transfer agent and an optional auxiliary under conditions of these reaction pressure and reaction temperature.

Examples of the radical polymerization initiator include general-purpose initiators such as peroxides, hydroperoxides, azo compounds, amine oxide compounds and oxygen. Examples of the chain transfer agent include saturated aliphatic hydrocarbons and halogen-substituted products thereof, such as methane, ethane, butane, isobutane, n-hexane, n-heptane and chloroform; saturated aliphatic alcohols such as methanol, ethanol, propanol and isopropanol; saturated aliphatic carbonyl compounds such as acetone and methyl ethyl ketone; aromatic compounds such as toluene, diethylbenzene and xylene; and hydrogen. When the α-olefin is neither propylene nor 1-butene, these compounds may also be used as the chain transfer agent in combination.

The grafting precursors obtained by polymerizing at least one vinyl monomer and a radical-(co)polymerizable organic peroxide in the presence of a copolymer of an α-olefin and a glycidyl group-containing unsaturated monomer are known compounds disclosed in, for example, Japanese Patent Application Laid-Open Nos. 131220/1989, 138214/1989 and 129245/1990. The grafting precursors are easily grafted by heating them to 100 to 300°C. The term "grafting" means that a polymer of the vinyl monomer is chemically bonded to the copolymer of the α-olefin and the glycidyl group-containing unsaturated monomer by graft reaction, crosslinking reaction or mixed reaction thereof. To have been chemically bonded can be clarified by, for example, the fact that two (co)polymers cannot be separated from each other by a solvent which dissolves one (co)polymer therein. As described above, the copolymer of the α-olefin and the glycidyl group-containing unsaturated monomer includes poly-component copolymers containing at least three monomers, to which a further unsaturated monomer has been copolymerized.

A proportion of the copolymer of the α-olefin and the glycidyl group-containing unsaturated monomer in the grafting precursor is generally 5 to 95 wt.%, preferably 20 to 90 wt.%. If the proportion of this copolymer is too low, the compatibility of the resulting grafting precursor with the PAS becomes insufficient. If the proportion is too high on the other hand, there is a possibility that the heat resistance and dimensional stability of the resulting resin composition may be lowered. A proportion of the glycidyl group-containing unsaturated monomer units in the copolymer is generally 0.5 to 50 wt.%, preferably 1 to 40 wt.%, more preferably 2 to 30 wt.%. When glycidyl group-containing unsaturated monomer units are contained in the polymer of the vinyl monomer, the proportion of the glycidyl group-containing unsaturated monomer units in the copolymer can be reduced according to the proportion of the glycidyl group-containing unsaturated monomer units contained in the polymer of the vinyl monomer.

Examples of the vinyl monomer used in the preparation of the grafting precursor include aromatic vinyl monomers such as styrene, α-methylstyrene and chlorostyrene; (meth)acrylic ester monomers such as the C₁₋₇-alkyl esters of (meth)acrylic acid; glycidyl ester monomers of α,β-unsaturated acids; unsaturated nitrile monomers such as (meth)acrylonitrile; and vinyl ester monomers such as vinyl acetate. Of these, any of the glycidyl ester monomers of α,β-unsaturated acids, aromatic vinyl monomers and unsaturated nitrile monomers may be preferably used as a main component. Incidentally, the (meth)acrylic acid means acrylic acid or methacrylic acid.

The epoxy group-containing α-olefin copolymer with the polymer of the vinyl monomer chemically bonded to the copolymer of the α-olefin and the glycidyl group-containing unsaturated monomer by graft reaction, crosslinking reaction or mixed reaction thereof can be obtained by copolymerizing such polymers by a chain transfer process, ionizing radiation irradiation process or the like. However, most preferably, the grafting precursor can be obtained by (co)polymerizing at least one vinyl monomer using a radical-(co)polymerizable organic peroxide such as t-butyl peroxymethacryloyloxyethyl-carbonate in the presence of a copolymer of an α-olefin and a glycidyl group-containing unsaturated monomer.

More specifically, in order to produce the grafting precursor, an aqueous suspension is prepared by suspending 100 parts by weight of the copolymer of the α-olefin and the glycidyl group-containing unsaturated monomer in water. On the other hand, a solution is prepared by dissolving, in 5 to 400 parts by weight of at least one vinyl monomer, at least one radical-(co)polymerizable organic peroxide in a proportion of 0.1 to 10 parts by weight per 100 parts by weight of the vinyl monomer, and a radical polymerization initiator, the decomposition temperature for obtaining a half-life of 10 hours of which is 40 to 90°C, in a proportion of 0.01 to 5 parts by weight per 100 parts by weight in total of the vinyl monomer and the radical-(co)polymerizable organic peroxide. The solution is added to the aqueous suspension, and the mixture is heated under conditions that the decomposition of the radical polymerization initiator does substantially not occur, thereby impregnating the copolymer of the α-olefin and the glycidyl group-containing unsaturated monomer with the vinyl monomer, radical-(co)polymerizable organic peroxide and radical polymerization initiator. Thereafter, the temperature of the aqueous suspension is raised to copolymerize the vinyl monomer and the radical-(co)polymerizable organic peroxide in the copolymer, thereby producing the grafting precursor.

This grafting precursor is melted and kneaded at 100 to 300°C, whereby an epoxy group-containing α-olefin copolymer of the structure that the polymer of the vinyl monomer is chemically bonded to the copolymer of the α-olefin and the glycidyl group-containing unsaturated monomer can be obtained. The grafting precursor may be grafted at the time it is melted and kneaded with the PAS and other components. Preferably, the epoxy group-containing α-olefin copolymer of the structure that the polymer of the vinyl monomer is chemically bonded to the copolymer of the α-olefin and the glycidyl group-containing unsaturated monomer is prepared in advance, and this copolymer is melted and kneaded with the PAS and other components.

As examples of the radical-(co)polymerizable organic peroxide used in the preparation of the grafting precursor, may be mentioned compounds represented by the following formula (1): 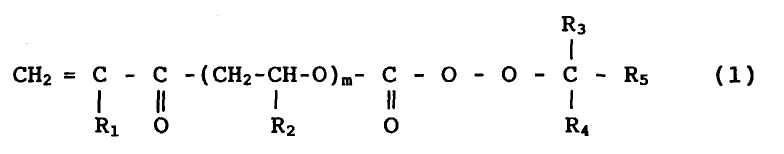 wherein R₁ is a hydrogen atom or an alkyl group having 1 or 2 carbon atoms, R₂ is a hydrogen atom or a methyl group, R₃ and R₄ are individually an alkyl group having 1 to 4 carbon atoms, R₅ is an alkyl group having 1 to 12 carbon atoms, a phenyl group, an alkyl-substituted phenyl group, or a cycloalkyl group having 3 to 12 carbon atoms, and m is 1 or 2.

As other examples of the radical-(co)polymerizable organic peroxide, may be mentioned compounds represented by the following formula (2): 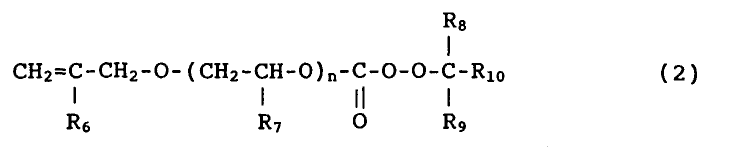 wherein R₆ is a hydrogen atom or an alkyl group having 1 to 4 carbon atoms, R₇ is a hydrogen atom or a methyl group, R₈ and R₉ are individually an alkyl group having 1 to 4 carbon atoms, R₁₀ is an alkyl group having 1 to 12 carbon atoms, a phenyl group, an alkyl-substituted phenyl group, or a cycloalkyl group having 3 to 12 carbon atoms, and n is 0, 1 or 2.

As examples of the radical-(co)polymerizable organic peroxides represented by the formula (1), may be mentioned t-butyl peroxy(meth)acryloyloxy(ethoxy)ethylcarbonate, t-amyl peroxy(meth)acryloyloxy(ethoxy)ethylcarbonate, t-hexyl peroxy(meth)acryloyloxy(ethoxy)ethylcarbonate, cumyl peroxy(meth)acryloyloxy(ethoxy)ethylcarbonate and p-isopropyl peroxy(meth)acryloyloxy(ethoxy)ethylcarbonate.

As examples of the radical-(co)polymerizable organic peroxides represented by the formula (2), may be mentioned t-butyl peroxy(meth)allylcarbonate, cumyl peroxy(meth)allylcarbonate and t-butyl peroxy(meth)allyloxyethylcarbonate.

Of these, t-butyl peroxyacryloyloxyethylcarbonate, t-butyl peroxymethacryloyloxyethylcarbonate, t-butyl peroxyallylcarbonate and t-butyl peroxymethacrylcarbonate are preferred.

The compounding proportion of the epoxy group-containing α-olefin copolymer is 10 to 29 wt.%, preferably 14 to 29 wt.% based on the total weight of the composition. If the compounding proportion is too low, the tensile elongation at break of the resulting resin composition becomes insufficient and hence tends to undergo brittle fracture. If the proportion is too high, the processability upon extrusion of the resulting resin composition is deteriorated, and moreover there is a possibility that the epoxy group-containing α-olefin copolymer may form a continuous layer in the resin composition to impair the characteristics inherent in the PAS.

### Other components:

As needed, various kinds of fillers may be compounded into the resin compositions according to the present invention so far as no detrimental influence as thereby imposed on the objects of the present invention.

Examples of the fillers include fibrous fillers, such as inorganic fibrous materials such as glass fibers, carbon fibers, asbestos fibers, silica fibers, alumina fibers, zirconia fibers, boron nitride fibers, silicon nitride fibers, boron fibers and potassium titanate fibers; metallic fibrous materials such as stainless steel, aluminum, titanium, copper and brass; and high-melting organic fibrous materials such as polyamide, fluorocarbon resins, polyester resins and acrylic resins.

As other examples of the fillers, may be mentioned particulate or powdery fillers such as mica, silica, talc, alumina, kaolin, calcium sulfate, calcium carbonate, titanium oxide, ferrite, clay, glass powder, zinc oxide, nickel carbonate, iron oxide, quartz powder, magnesium carbonate and barium sulfate.

These fillers may be use either singly or in any combination thereof. The fillers may be treated with greige goods or surface-treating agents as needed. Examples of the greige goods or surface-treating agents include functional compounds such as epoxy compounds, isocyanate compounds, silane compounds and titanate compounds. These compounds may be used for conducting a surface treatment or collecting treatment in advance or added at the same time upon the preparation of the composition.

For examples, resin-modifying agents such as ethyleneglycidyl methacrylate; lubricants such as pentaerythritol tetrastearate; thermosetting resins; antioxidants; ultraviolet absorbents; nucleating agents such as boron nitride; flame retardants; colorants such as dyes and pigments; etc. may be suitably added as other additives.

To the resin compositions according to the present invention, may be added other thermoplastic resins within limits not impairing the objects of the present invention. The other thermoplastic resins are preferably thermoplastic resins stable at high temperatures. As specific examples thereof, may be mentioned aromatic polyesters such as polyethylene terephthalate and polybutylene terephthalate; fluorocarbon resins such as polytetrafluoroethylene, tetrafluoroethylene/hexafluoropropylene copolymers, tetrafluoroethylene/perfluoroalkyl vinyl ether copolymers, polychlorotrifluoroethylene, polyvinylidene fluoride, polyvinylidene fluoride/hexafluoropropylene copolymers, propylene/tetrafluoroethylene copolymers, vinylidene fluoride/chlorotrifluoroethylene copolymers and ethylene/hexafluoropropylene copolymers; polyacetal, polystyrene, polyamide, polycarbonate, polyphenylene ether, polyalkyl acrylate, ABS resins, and polyvinyl chloride. These other thermoplastic resins may be used either singly or in any combination thereof.

### PAS resin composition:

The PAS resin compositions according to the present invention can be prepared by equipment and methods generally used in the preparation of synthetic resin compositions. More specifically, individual raw components can be mixed, kneaded in a single-screw or twin-screw extruder and extruded into pellets for molding or forming. There may also be used a method in which part of the necessary components are mixed to prepare a masterbatch, and the masterbatch is then mixed with the remaining components, or a method in which part of raw materials used are ground for the purpose of enhancing the dispersibility of the individual components, thereby making the particle sizes of the components uniform, and they are mixed and melt-extruded.

The PAS resin compositions according to the present invention have a volume resistivity within a moderately conductive region, and moreover is excellent in toughness, flexibility at low temperatures, etc. The PAS resin compositions according to the present invention have good molding or forming ability while retaining the excellent properties inherent in the PAS, such as heat resistance, weather resistance, flame retardancy, chemical resistance and mechanical strength and permit controlling their volume resistivities to a desired value within a range of 10³-10¹³ Ωcm with good reproducibility.

The PAS resin compositions according to the present invention can be applied to fields of which electrical conductivity, antistatic property, electromagnetic wave shielding ability, low electrical resistance, etc. are required, for example, wide fields such as electrical and electronic parts, electric appliances and acoustic equipment, making good use of such excellent properties.

The PAS resin compositions according to the present invention can be formed into various formed or molded products such as sheets, films, tubes, pipes, rods, monofilaments, containers, cases, etc. by conventional melt processing techniques such as injection molding and extrusion. The PAS resin compositions according to the present invention can be formed into coating members.

Examples of specific uses of the PAS resin compositions according to the present invention include conveyor tubes for powder coatings, joints for powder coating, films for packaging electronic parts, containers for packaging electronic parts, carriers for silicon wafers, cases for silicon wafers, IC trays, shielded packs, containers for semiconductors, containers for liquid crystals, fuel tubes, joints for conductive tubes, and sheathing materials for various kinds of apparatus or equipment. Examples of other uses of the PAS resin compositions according to the present invention include charging rolls, transfer rolls, developing rolls, charging belts, static charge eliminating belts and the like in image forming apparatus of the electrophotographic system.

The PAS resin compositions according to the present invention are suitable for use as parts for cables which are required to have moderate electrical conductivity and excellent heat resistance, weather resistance, chemical resistance and flame retardancy, and sufficient tensile elongation at break. Parts for cables composed of the PAS resin compositions according to the present invention have excellent electrical and magnetic properties such as relaxation of electric field concentration, relaxation of electrical stress, anti-corona discharging property, antistatic property and electromagnetic wave shielding ability and are also excellent in heat resistance, weather resistance, flame retardancy, waterproofness, airtightness, toughness, flexibility at low temperatures, etc. The PAS resin compositions according to the present invention also have a moderately high dielectric constant. The PAS resin compositions according to the present invention are suitable for use as parts for cables, which have, as their objects, the prevention of corona noise, wind noise and icing (icicle), measures for electromagnetic radiation, etc. The parts for cables may be composed of a combination of a member formed of the PAS resin composition with a member formed of another material.

Examples of the parts for cables include (1) members for making up a main body of a cable (for example, coating members such as outer moderately conductive layers, sheaths, conductive layers and electromagnetic wave-shielding layers), (2) parts used for laying a cable (for example, clamps for fitting a cable with parts, clamps for anchoring a cable, spacers for keeping a distance between parallel conductors, devices for removing ice or snow from a cable, devices for damping mechanical vibrations of a cable, etc.), and (3) accessories for cables (for example, cable end parts, parts for cable connection, etc.).

As specific examples of the parts for cables, may be mentioned coating members for cables, clamps for electrical wires, spacers, spiral rods, stress cones, labeling parts, covers for ground lead outlets, clamping bands, connecting parts, joint reinforcing members, sleeves, sleeve covers, bushings, protectors, cable terminals, cable joints, field-relaxing tubes, connectors, closures, field-relaxing tapes, parts for lightning arresters, parts for insulator sets, parts for transmission line supporting devices, cable anchoring devices, binding devices for wire harnesses, de-icing fixtures for electrical wires, etc. The forms and functions of the parts for cables may be optionally selected from among, for example, heat-shrinkable tubes, thermally recovering parts, pipes, tapes, sheets, rods, etc.

### 〈EXAMPLES〉

The present invention will hereinafter be described more specifically by the following Examples and Comparative Examples. It should however be borne in mind that the present invention is not limited by these examples only.

Physical properties in the examples were determined in accordance with the following respective methods.

### (1) Tensile properties (tensile strength and tensile elongation):

The tensile strength and tensile elongation (tensile elongation at break) of each resin composition sample were determined under conditions of a measuring temperature of 23°C, a gage length of 50 mm and a crosshead speed of 5 mm/min in accordance with ASTM D 638.

### (2) Volume resistivity:

The volume resistivity of each resin composition sample was measured in accordance with JIS K 6911.

### [Synthesis Example 1] (Synthesis of Polymer A)

A polymerizer was charged with 720 kg of N-methyl-2-pyrrolidone (NMP) and 420 kg of sodium sulfide pentahydrate containing 46.21 wt.% of sodium sulfide (Na₂S). After purged with nitrogen gas, the temperature of the reaction system was gradually raised to 200°C with stirring to distill off 160 kg of water. At this time, 62 moles of H₂S were volatilized off at the same time.

After the dehydration step described above, the polymerizer was charged with 364 kg of p-dichlorobenzene (hereinafter abbreviated as "pDCB") and 250 kg of NMP to conduct a reaction at 220°C for 4.5 hours with stirring. While continuing the stirring, 59 kg of water were then introduced under pressure into the polymerizer, and the contents were heated to 255°C to conduct a reaction for 5 hours. After completion of the reaction, the reaction mixture was cooled near to room temperature, and the contents were sifted through a screen of 100 mesh to collect a granular polymer. The thus-collected granular polymer was washed twice with acetone and 3 times with water, thereby obtaining a washed polymer. This washed polymer was further washed with a 3 wt.% aqueous solution of ammonium chloride and then washed with water. After dehydration, the collected granular polymer was dried at 105°C for 3 hours. The yield of Polymer (A) thus obtained was 89%, and its melt viscosity was 140 Pa·s.

### [Synthesis Example 2] (Synthesis of Polymer B)

A polymerizer was charged with 720 kg of NMP and 420 kg of sodium sulfide pentahydrate containing 46.21 wt.% of sodium sulfide. After purged with nitrogen gas, the temperature of the reaction system was gradually raised to 200°C with stirring to distill off 158 kg of water. At this time, 62 moles of H₂S were volatilized off at the same time. The polymerizer was then charged with 371 kg of pDCB and 189 kg of NMP to conduct a reaction at 220°C for 4.5 hours with stirring. While continuing the stirring, 49 kg of water were then introduced under pressure into the polymerizer, and the contents were heated to 255°C to conduct a reaction for 5 hours. After completion of the reaction, a polymer formed was treated in the same manner as in Synthesis Example 1. The yield of Polymer (B) thus obtained was 92%, and its melt viscosity was 55 Pa·s.

### [Synthesis Example 3] (Synthesis of Polymer C)

A polymerizer was charged with 800 kg of NMP and 390 kg of sodium sulfide pentahydrate containing 46.40 wt.% of sodium sulfide. After purged with nitrogen gas, the temperature of the reaction system was gradually raised to 200°C with stirring to distill off 147 kg of water. At this time, 57 moles of H₂S were volatilized off at the same time. The polymerizer was then charged with 339 kg of pDCB, 218 kg of NMP and 9.2 kg of water to conduct a reaction at 220°C for 4.5 hours with stirring. While continuing the stirring, 70 kg of water were then introduced under pressure into the polymerizer, and the contents were heated to 255°C to conduct a reaction for 3 hours. The reaction was then continued at 245°C for 8 hours. After completion of the reaction, the reaction mixture was treated in the same manner as in Synthesis Example 1 to recover a granular polymer. The yield of Polymer (C) thus recovered was 90%, and its melt viscosity was 236 Pa·s.

### [Examples 1 to 7 and Comparative Examples 1 to 8]

After their corresponding polymer components shown in Table 1 were uniformly dry blended in a Henschel mixer, the resultant blends were separately fed to a twin-screw kneader extruder (CM-45, manufactured by Ikegai Corp.) having a barrel diameter of 45 mm and kneaded at a cylinder temperature of 260 to 330°C, thereby producing pellets. The pellets thus obtained were dried at 150°C for 6 hours and then molded at a mold temperature of 135°C and a cylinder temperature of 300 to 320°C by an injection molding machine (IS-75, manufacture by Toshiba Machine Co., Ltd.) to form specimens for tensile test. The results are shown in Table 1.

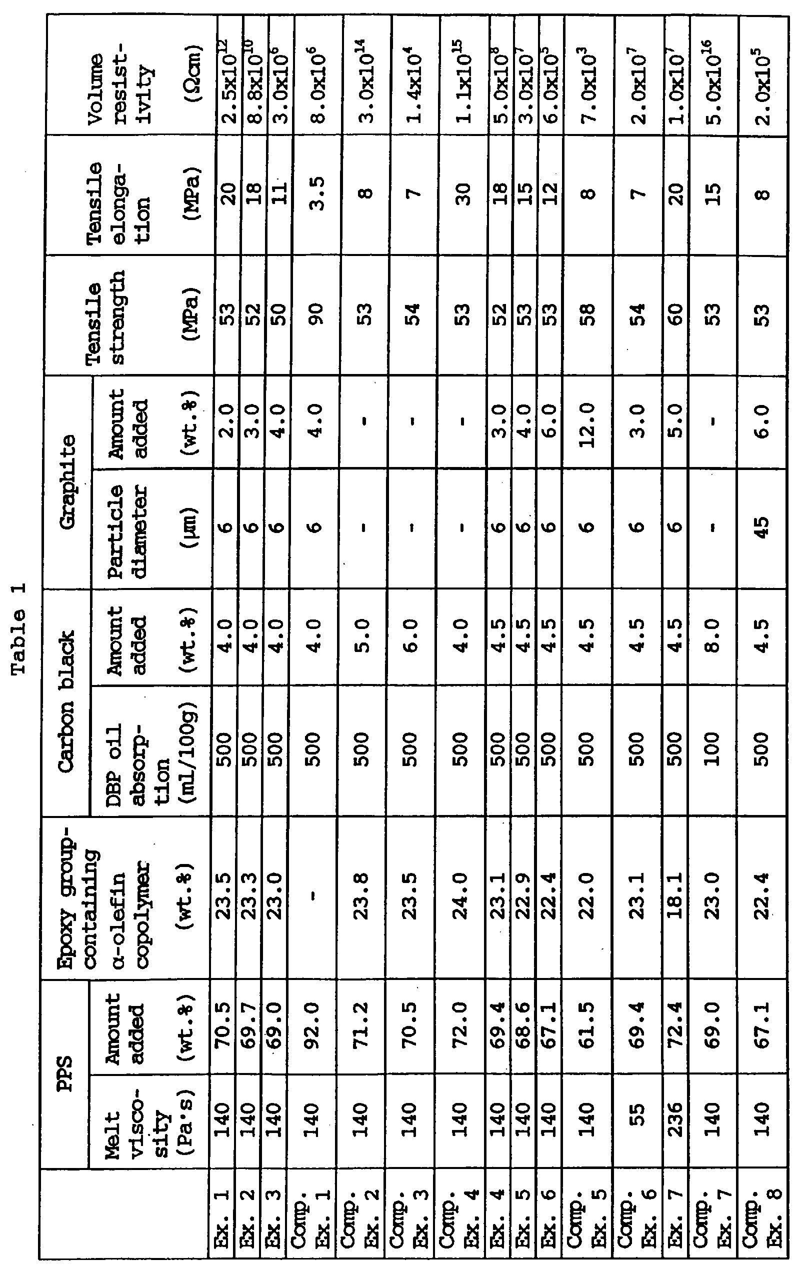

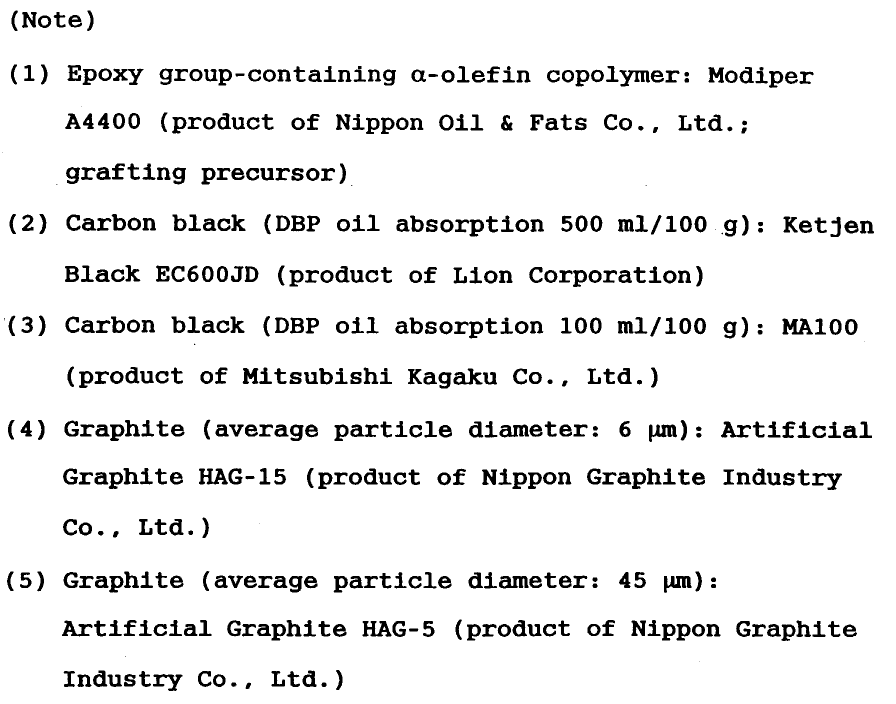

### [Example 8]

An insulating rod (made of a reinforced plastic; 2 cm in diameter) was coated (thickness: 2 mm) with the resin composition obtained in Example 1 by an extrusion to make a rod-like spacer by way of trial. This trial rod-like spacer was excellent in weather resistance, waterproofness, etc., and its volume resistivity was stable, so that its insulation resistance was scarcely changed by water (rainwater).

### [Example 9]

The resin composition obtained in Example 7 was fed to a single-screw extruder having a barrel diameter of 45 mm and equipped with a die composed of 3 nozzles each having a nozzle diameter of 3 mm and extruded at a cylinder temperature of 220 to 330°C. Fibrous extrudates extruded through the nozzles were cooled in hot water of 80°C, one-stage stretched 1.2 times under wet heat of 90°C, and then relaxed for 30 seconds under dry heat of 240°C, thereby obtaining monofilaments having a diameter of 1.5 mm. Each of the monofilaments was wound as a spiral rod 2 around an aerial wire 1 as illustrated in FIG. 1 to evaluate its properties. As a result, the filament was found to be excellent in not only heat resistance and weather resistance but also resistance to wind noise, resistance to corona noise and corona discharge properties.

### 〈INDUSTRIAL APPLICABILITY〉

According to the present invention, there can be provided PAS resin compositions having a volume resistivity within a range of 10³-10¹³ Ωcm with good reproducibility. In addition, the PAS resin compositions have excellent toughness as demonstrated by a tensile elongation at break of at least 10% and can be formed into various kinds of formed or molded products by injection molding, extrusion or the like.

Since the PAS resin compositions have both electrical and magnetic properties such as electrical conductivity (moderate conductivity), antistatic property and electromagnetic wave shielding ability, and various properties inherent in PAS, such as heat resistance, weather resistance, flame retardancy and chemical resistance, and are also excellent in toughness, they are suitable for use as parts for cables. The parts for cables according to the present invention have excellent electrical and magnetic properties such as relaxation of electric field concentration, relaxation of electrical stress, anti-corona discharging property, antistatic property and electromagnetic wave shielding ability and are also excellent in heat resistance, weather resistance, flame retardancy, waterproofness, airtightness, toughness, etc.

The PAS resin compositions according to the present invention can be applied to wide fields of which electrical conductivity, antistatic property, electromagnetic wave shielding ability, low electrical resistance, etc. are required, making good use of such excellent properties as described above.

## Claims

1. A poly(arylene sulfide) resin composition comprising:
(A) 55 to 85 wt.% of a poly(arylene sulfide) having a melt viscosity of at least 80 Pa·s as measured at 310°C and a shear rate of 1,200/sec;
(B) 3 to 6 wt.% of conductive carbon black having an oil absorption of at least 360 ml/100 g as determined by using DBP;
(C) 2 to 10 wt.% of graphite having an average particle diameter of at most 30 µm; and
(D) 10 to 29 wt.% of an epoxy group-containing α-olefin copolymer.

2. The poly(arylene sulfide) resin composition according to Claim 1, wherein the volume resistivity of the resin composition falls within a range of 10³-10¹³ Ωcm.

3. The poly(arylene sulfide) resin composition according to Claim 1, wherein the tensile elongation at break of the resin composition is at least 10%.

4. The poly(arylene sulfide) resin composition according to Claim 1, wherein the poly(arylene sulfide) (A) is poly(phenylene sulfide).

5. The poly(arylene sulfide) resin composition according to Claim 1, wherein the DBP oil absorption of the conductive carbon black (B) falls within a range of 400 to 600 ml/100 g.

6. The poly(arylene sulfide) resin composition according to Claim 1, wherein the average particle diameter of the graphite (C) is at most 15 µm.

7. The poly(arylene sulfide) resin composition according to Claim 1, wherein the epoxy group-containing α-olefin copolymer (D) is a copolymer of an α-olefin and a glycidyl group-containing unsaturated monomer.

8. The poly(arylene sulfide) resin composition according to Claim 1, wherein the epoxy group-containing α-olefin copolymer (D) is a grafting precursor obtained by copolymerizing at least one vinyl monomer and a radical-(co)polymerizable organic peroxide in the presence of a copolymer of an α-olefin and a glycidyl group-containing unsaturated monomer.

9. A molded or formed product composed of a poly(arylene sulfide) resin composition comprising:
(A) 55 to 85 wt.% of a poly(arylene sulfide) having a melt viscosity of at least 80 Pa·s as measured at 310°C and a shear rate of 1,200/sec;
(B) 3 to 6 wt.% of conductive carbon black having an oil absorption of at least 360 ml/100 g as determined by using DBP;
(C) 2 to 10 wt.% of graphite having an average particle diameter of at most 30 µm; and
(D) 10 to 29 wt.% of an epoxy group-containing α-olefin copolymer.

10. The molded or formed product according to Claim 9, which is an extruded product.

11. The formed or molded product according to Claim 10, which is a sheet, film, tube, pipe, rod or monofilament.

12. The molded or formed product according to Claim 9, which is an injection-molded product.

13. The formed or molded product according to Claim 12, which is a case or container.

14. The molded or formed product according to Claim 9, which is a coating member.

15. The molded or formed product according to Claim 9, which is a part for cable.
